# EUROPEAN PATENT APPLICATION

(11) **EP 4 049 894 A1**
(43) Date of publication of application: **31.08.2022**
(21) Application number: 21217417.1
(22) Date of filing: 23.12.2021
(51) Int. Cl.: B60N 3/02, B60J 5/06

(54) **ENTRANCE HANDRAIL AND SLIDE DOOR MECHANISM**

(30) Priority: 25.02.2021 JP 2021029268
(71) Applicant: TOYOTA JIDOSHA KABUSHIKI KAISHA, Toyota-shi, Aichi-ken, 471-8571 (JP)
(72) Inventor: SAKURAI, Hideyuki, TOYOTA-SHI, AICHI-KEN, 471-8571 (JP); OTA, Yuto, TOYOTA-SHI, AICHI-KEN, 471-8571 (JP)
(74) Representative: Cabinet Beau de Loménie

(57) **Abstract**

An entrance handrail (30) includes: a base portion (32) provided proximal to an entrance opening (16) of a vehicle so as to be turnable; a handrail body (34) that extends from the base portion (32); and a rail portion (36) that extends from the base portion (32) and that holds a second end portion (42) of a link arm (40) such that the second end portion (42) is slidable. A first end portion of the link arm (40) is turnably attached to a slide door (20) that is movable along an outer wall surface (12A) of the vehicle to open and close the entrance opening (16). The handrail body (34) and the rail portion (36) project outward of the vehicle when the slide door (20) opens the entrance opening (16). The handrail body (34) and the rail portion (36) are disposed to extend along the slide door (20) when the slide door (20) closes the entrance opening (16).

## Description

### BACKGROUND OF THE INVENTION

### 1. Field of the Invention

The present disclosure relates to an entrance handrail.

### 2. Description of Related Art

There has been known an entrance handrail that projects outward of a vehicle through an entrance opening when a swing door that is movable along the outer side surface of a bus is open, and that projects inward of the vehicle to suppress entry of a passenger to the entrance opening when the swing door is closed (see Japanese Unexamined Patent Application Publication No. 8-118958 (JP 8-118958 A).

### SUMMARY OF THE INVENTION

If the entrance handrail is configured to project inward of the vehicle when the swing door is closed, however, the entrance handrail may limit the passenger space if the vehicle is a small bus.

The present disclosure provides an entrance handrail that suppresses limitation on the passenger space.

An entrance handrail according to a first aspect of the present disclosure includes: a base portion provided proximal to an entrance opening of a vehicle so as to be turnable in a manner such that a vehicle body up-down direction corresponds to an axial direction of the base portion; a handrail body that extends from an upper part of the base portion and that is graspable by a passenger that gets on and off through the entrance opening; and a rail portion that extends from a lower part of the base portion, the rail portion holding a second end portion of a link arm such that the second end portion is slidable, the link arm including a first end portion turnably attached to a slide door that is movable along an outer wall surface of the vehicle to open and close the entrance opening. As viewed in a plan view, the handrail body and the rail portion take a developed posture in which the handrail body and the rail portion project outward of the vehicle with the second end portion of the link arm slid toward the base portion along the rail portion when the slide door opens the entrance opening, and the handrail body and the rail portion take a retracted posture in which the handrail body and the rail portion are disposed to extend along the slide door with the second end portion of the link arm slid toward an opposite side from the base portion along the rail portion when the slide door closes the entrance opening.

In the aspect described above, as viewed in a plan view, the handrail body and the rail portion take the developed posture in which the handrail body and the rail portion project outward of the vehicle when the slide door opens the entrance opening, and the handrail body and the rail portion take the retracted posture in which the handrail body and the rail portion are disposed to extend along the slide door when the slide door closes the entrance opening. That is, the handrail body and the rail portion do not project inward of the vehicle when the entrance handrail takes the retracted posture. Thus, limitation on the passenger space is suppressed even when the entrance handrail is provided. The second end portion of the link arm is slidably held by the rail portion. The link arm includes the first end portion turnably attached to the slide door. Therefore, the length of the handrail body and the rail portion can be adjusted to a desired length compared to when the second end portion of the link arm is slidably held by the rail portion and the link arm includes the first end portion non-turnably attached to the slide door.

In the entrance handrail described above, the slide door may be provided with a restriction member that restricts turning of the link arm when the handrail body and the rail portion take at least one of the developed posture and the retracted posture.

With the entrance handrail described above, the restriction member that is provided on the slide door may restrict turning of the link arm when the handrail body and the rail portion take at least one of the developed posture and the retracted posture. Thus, backlash (rattling) of the handrail body and the rail portion is suppressed when such a posture is taken, which allows the handrail body and the rail portion to be fixedly held appropriately.

In the entrance handrail described above, the base portion may be provided with a biasing member that biases the handrail body and the rail portion in an opposite direction to a direction in which the handrail body and the rail portion project outward of the vehicle when the slide door opens the entrance opening.

With the entrance handrail described above, the biasing member that is provided on the base portion may bias the handrail body and the rail portion in an opposite direction to a direction in which the handrail body and the rail portion project outward of the vehicle when the slide door opens the entrance opening. Thus, the handrail body and the rail portion move following the slide door when the developed posture is taken. Consequently, interference of the link arm with the rail portion is suppressed or restrained, which allows the handrail body and the rail portion to be turned smoothly. With such a biasing member, the handrail body and the rail portion move ahead of the slide door when the retracted posture is taken. Thus, interference of the link arm with the rail portion is suppressed or restrained also at this time, which allows the handrail body and the rail portion to be turned smoothly.

In the entrance handrail described above, the base portion may be provided with a resistance mechanism that provides resistance against turning of the handrail body and the rail portion in a direction in which the handrail body and the rail portion project outward of the vehicle when the slide door opens the entrance opening.

With the entrance handrail described above, the resistance mechanism that is provided on the base portion makes it difficult for the handrail body and the rail portion to turn in the direction of projecting outward of the vehicle when the slide door opens the entrance opening. Thus, the handrail body and the rail portion move following the slide door when the developed posture is taken. Consequently, interference of the link arm with the rail portion is suppressed or restrained, which allows the handrail body and the rail portion to be turned smoothly.

In the entrance handrail described above, the slide door may be provided with a rolling member that is rollable in contact with an outer wall surface of the rail portion at least when the slide door closes the entrance opening.

With the entrance handrail described above, the slide door may be provided with a rolling member that is rollable in contact with the outer wall surface of the rail portion at least when the slide door closes the entrance opening. Thus, the rail portion is diverted by the rolling member, even if the link arm interferes with the rail portion, when the handrail body and the rail portion are brought from the developed posture into the retracted posture. Consequently, the handrail body and the rail portion are turned smoothly.

In the entrance handrail described above, the second end portion of the link arm may be provided with a rolling element that rolls in contact with an inner wall surface of the rail portion.

With the entrance handrail described above, the second end portion of the link arm may be provided with a rolling element that rolls in contact with the inner wall surface of the rail portion. Thus, the second end portion of the link arm moves smoothly along the rail portion compared to when the second end portion of the link arm is not provided with a rolling element that rolls in contact with the inner wall surface of the rail portion.

In the entrance handrail described above, a distal end portion of the handrail body in an extending direction and a distal end portion of the rail portion in an extending direction may be integrally coupled to each other.

With the entrance handrail described above, the distal end portion of the handrail body in the extending direction and the distal end portion of the rail portion in the extending direction may be integrally coupled to each other. Thus, the rigidity and the strength of the handrail body are improved compared to when the distal end portion of the handrail body in the extending direction and the distal end portion of the rail portion in the extending direction are not integrally coupled to each other.

A second aspect of the present disclosure provides a slide door mechanism. The slide door mechanism includes: an entrance handrail; a slide door that is movable along an outer wall surface of a vehicle to open and close an entrance opening; and a link arm. The entrance handrail includes: a base portion provided proximal to the entrance opening of the vehicle so as to be turnable in a manner such that a vehicle body up-down direction corresponds to an axial direction of the base portion; a handrail body that extends from an upper part of the base portion and that is graspable by a passenger that gets on and off through the entrance opening; and a rail portion that extends from a lower part of the base portion. A first end portion of the link arm is turnably attached to the slide door, and a second end portion of the link arm is slidably held by the rail portion. As viewed in a plan view, the handrail body and the rail portion take a developed posture in which the handrail body and the rail portion project outward of the vehicle with the second end portion of the link arm slid toward the base portion along the rail portion when the slide door opens the entrance opening. The handrail body and the rail portion take a retracted posture in which the handrail body and the rail portion are disposed to extend along the slide door with the second end portion of the link arm slid toward an opposite side from the base portion along the rail portion when the slide door closes the entrance opening.

With the slide door mechanism described above, it is possible to install the entrance handrail according to the first aspect of the present disclosure.

A third aspect of the present disclosure provides an entrance handrail. The entrance handrail includes: a base portion provided proximal to an entrance opening of a vehicle so as to be turnable in a manner such that a vehicle body up-down direction corresponds to an axial direction of the base portion; and a handrail body that extends from the base portion and that is graspable by a passenger that gets on and off through the entrance opening. The handrail body includes a rail portion, the rail portion holding a second end portion of a link arm such that the second end portion is slidable, the link arm including a first end portion turnably attached to a slide door that is movable along an outer wall surface of the vehicle to open and close the entrance opening. As viewed in a plan view, the handrail body takes a developed posture in which the handrail body projects outward of the vehicle with the second end portion of the link arm slid toward the base portion along the rail portion when the slide door opens the entrance opening. The handrail body takes a retracted posture in which the handrail body is disposed to extend along the slide door with the second end portion of the link arm slid toward an opposite side from the base portion along the rail portion when the slide door closes the entrance opening.

With the aspects of the present disclosure, as has been described above, it is possible to suppress limitation on the passenger space even when an entrance handrail is provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating a bus including entrance handrails and a slide door mechanism according to the present embodiment, with an entrance opening opened;
FIG. 2 is a side view illustrating the bus including the entrance handrails and the slide door mechanism according to the present embodiment, with the entrance opening closed;
FIG. 3 is a perspective view illustrating an entrance handrail according to the present embodiment;
FIG. 4 is a perspective view illustrating a link arm slidably held by a rail portion of the entrance handrail according to the present embodiment;
FIG. 5 is a front view illustrating the entrance handrail according to the present embodiment in the retracted posture;
FIG. 6 is a plan view illustrating the entrance handrail according to the present embodiment in the retracted posture;
FIG. 7 is a front view illustrating the entrance handrail according to the present embodiment in the developed posture;
FIG. 8 is a plan view illustrating the entrance handrail according to the present embodiment in the developed posture;
FIG. 9 is a plan view illustrating the locus of movement of the entrance handrail according to the present embodiment;
FIG. 10 is a plan view illustrating the locus of movement of an entrance handrail according to a comparative example;
FIG. 11 is a perspective view illustrating an entrance handrail according to a first modification of the present embodiment;
FIG. 12A is a plan view illustrating the entrance handrail according to the first modification in the retracted posture;
FIG. 12B is a plan view illustrating the entrance handrail according to the first modification in the developed posture;
FIG. 13A is a plan view illustrating an entrance handrail according to a second modification in the retracted posture;
FIG. 13B is a plan view illustrating a posture of the entrance handrail according to the second modification, which is being developed;
FIG. 14 is a perspective view illustrating a link arm slidably held by a rail portion of an entrance handrail according to a modification of the present embodiment;
FIG. 15A is a plan view illustrating an entrance handrail according to a comparative example in the retracted posture; and
FIG. 15B is a plan view illustrating the entrance handrail according to the comparative example in the developed posture.

### DETAILED DESCRIPTION OF EMBODIMENTS

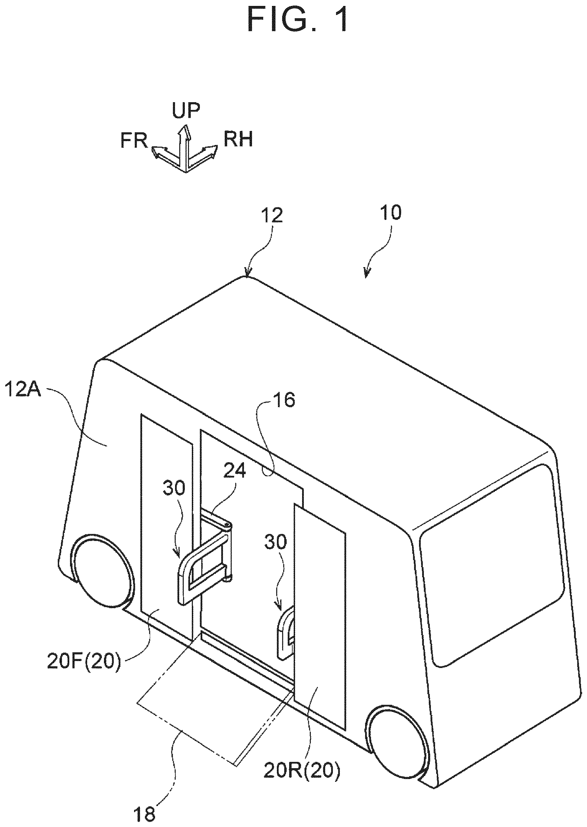

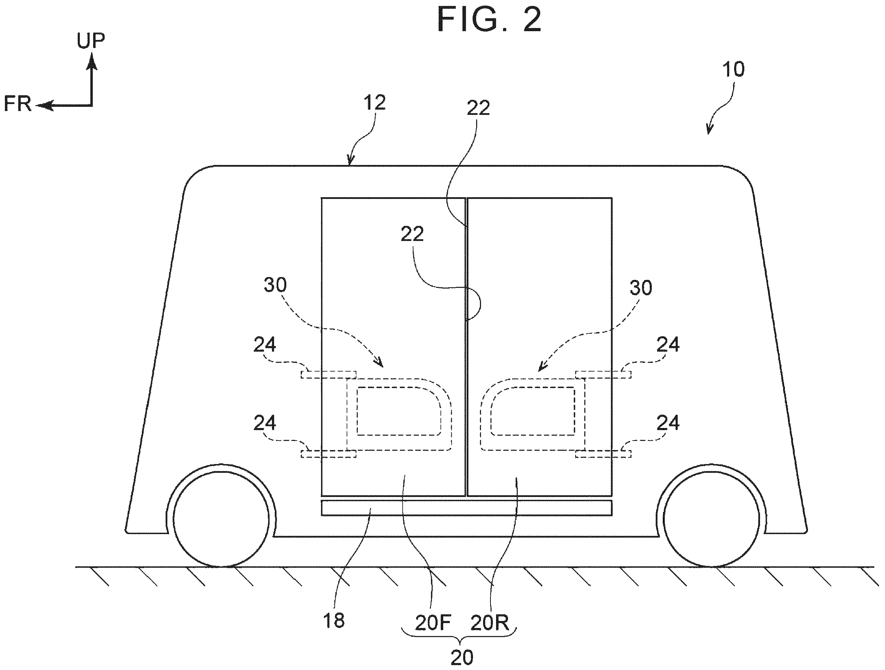

An embodiment according to the present disclosure will be described in detail below with reference to the drawings. It should be noted, however, that the embodiment is merely one example and is not limiting. An entrance handrail 30 according to the present embodiment is suitably provided for a small bus (including a Mobility as a Service (Maas) vehicle represented by an autonomous bus) 10 that is an example of share-ride vehicles (see FIGS. 1 and 2).

Thus, for convenience of description, the arrow UP indicated in the drawings as appropriate indicates the upward direction of the vehicle body of the bus 10, the arrow FR indicates the forward direction of the vehicle body of the bus 10, the arrow RH indicates the rightward direction of the vehicle body of the bus 10, and the arrow LH indicates the leftward direction of the vehicle body of the bus 10. When the upward, downward, forward, rearward, rightward, and leftward directions are indicated without specifically defining such directions in the following description, the upper and lower (sides) in the vehicle body up-down direction, the front and rear in the vehicle body front-rear direction, and the right and left in the vehicle body right-left direction (vehicle width direction) are indicated.

As illustrated in FIGS. 1 and 2, an entrance opening 16 in a rectangular shape as viewed from a side is provided in a left side wall (one side wall) of a vehicle body 12 of the bus 10 at the approximately middle portion in the front-rear direction. The bus 10 is provided with slide doors 20 that are movable in opposite directions generally along the front-rear direction to open and close the entrance opening 16.

The slide doors 20 are constituted from a half door 20F on the front side and a half door 20R on the rear side, each in the shape of a rectangle that is longer in the up-down direction than in the front-rear direction as viewed from a side. The half door 20F on the front side and the half door 20R on the rear side are configured to be able to open and close the entrance opening 16 by synchronously sliding (moving) along an outer wall surface 12A of the bus 10 in directions away from and closer to each other.

An elastic body 22 (see FIG. 2) such as rubber is attached to each of inner end surfaces, in the front-rear direction, of the half door 20F and half door 20R that contact each other when the entrance opening 16 is closed (in other words, the rear end surface of the half door 20F and the front end surface of the half door 20R), the elastic body 22 extending over the entire end surfaces in the up-down direction. That is, the half door 20F and the half door 20R close the entrance opening 16 with the respective elastic bodies 22 contacting each other while being elastically deformed.

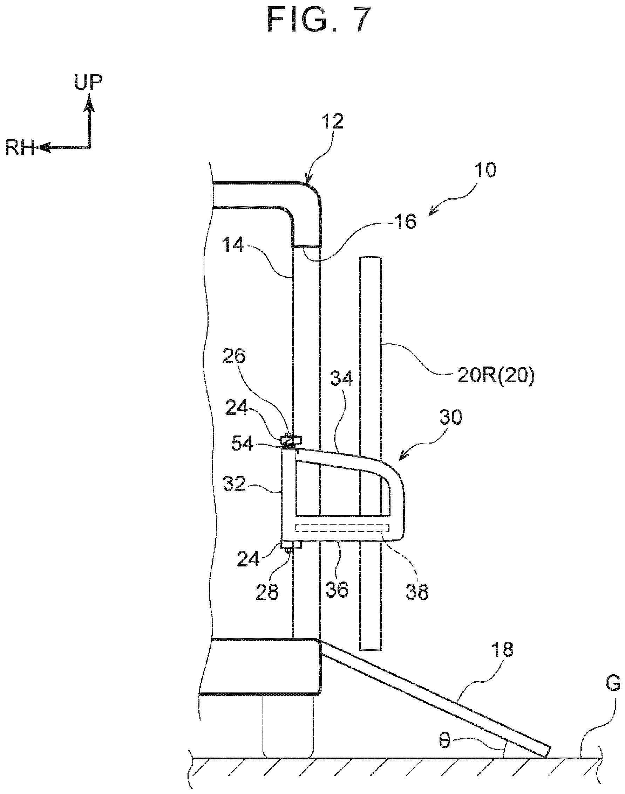

As illustrated in FIG. 1, a slope 18 that can project outward of the vehicle is housed in the vehicle body 12 under the entrance opening 16 (e.g. under a floor panel). The slope 18 is formed in a flat plate shape, and configured to be electrically drawn out and retracted. As illustrated in FIG. 7, the slope 18 that has been drawn out is disposed at a predetermined inclination angle θ with the distal end portion of the slope 18 in the draw-out direction supported on a ground G.

As illustrated in FIGS. 1 and 2, the bus 10 is provided with a pair of front and rear entrance handrails 30. The entrance handrails 30 take a retracted posture in which the entrance handrails 30 are disposed to extend along the slide doors 20 inward of the entrance opening 16 (on the inner side in the vehicle width direction) when the slide doors 20 are closed, and take a developed posture in which the entrance handrails 30 project outward (toward the outer side in the vehicle width direction) through the entrance opening 16 when the slide doors 20 are open. A slide door mechanism is formed by the entrance handrail 30, a slide door 20 and a link arm 40 which will be described below.

The entrance handrails 30 are made of metal (e.g. aluminum), and formed symmetrically in the front-rear direction. For example, the pair of entrance handrails 30 are formed symmetrically in the vehicle front-rear direction. The entrance handrails 30 are formed such that the length of the entrance handrails 30 in the horizontal direction is smaller than the width of the half door 20F and the width of the half door 20R. Consequently, the entrance handrails 30 can be disposed at the same height in the entrance opening 16 (see FIG. 2).

The entrance handrails 30 are configured to project toward the outer side in the vehicle width direction through the entrance opening 16 in conjunction with opening operation when the slide doors 20 (the half door 20F and the half door 20R) are slid to open the entrance opening 16. The entrance handrails 30 have the same structure and are symmetric in the front-rear direction. Therefore, the entrance handrail 30 on the rear side (on the half door 20R side) will be mainly described below as an example.

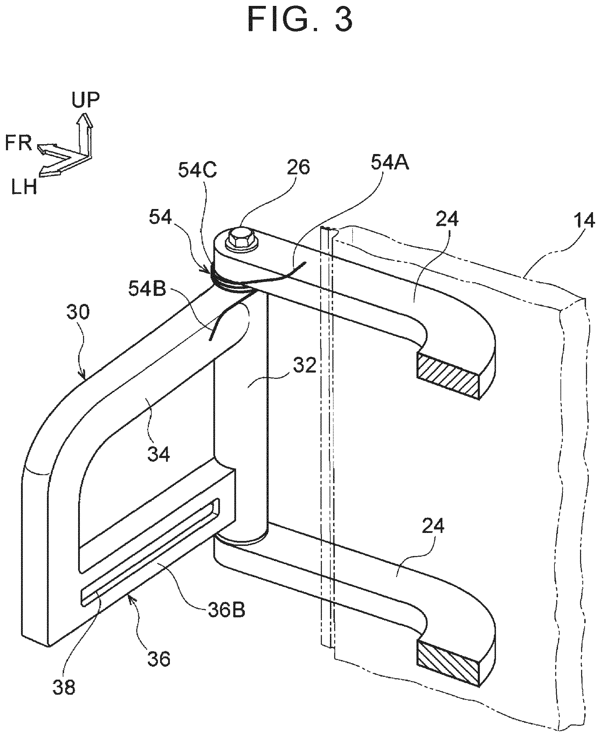

In one example, as illustrated in FIG. 3, the entrance handrail 30 includes a cylindrical base portion 32, a handrail body 34, a first end portion of which is provided integrally with the upper part of the outer peripheral surface of the base portion 32, and a rail portion 36, a first end portion of which is provided integrally with the lower part of the outer peripheral surface of the base portion 32. A second end portion (distal end portion in the extending direction) of the handrail body 34 and a second end portion (distal end portion in the extending direction) of the rail portion 36 are integrally coupled to each other. The term "extending direction" as used herein indicates the direction in which the handrail body 34 and the rail portion 36 extend outward from the base portion 32 of the entrance handrail 30.

In another example, as also illustrated in FIG. 3, the entrance handrail 30 includes a cylindrical base portion 32 and a handrail body 34, and a rail portion 36 is considered to be included in the handrail body 34. In this case, the rail portion 36 is considered to be provided at the lower part of the handrail body 34.

The base portion 32 is provided proximal to the entrance opening 16 of the bus 10 (e.g. on the inner wall surface of a pillar 14) so as to be rotatable (turnable) in a manner such that the up-down direction corresponds to the axial direction of the base portion 32. To be specific, first end portions of a pair of upper and lower support arms 24 are provided integrally with the inner wall surface of the pillar 14, and the base portion 32 is disposed between second end portions of the support arms 24.

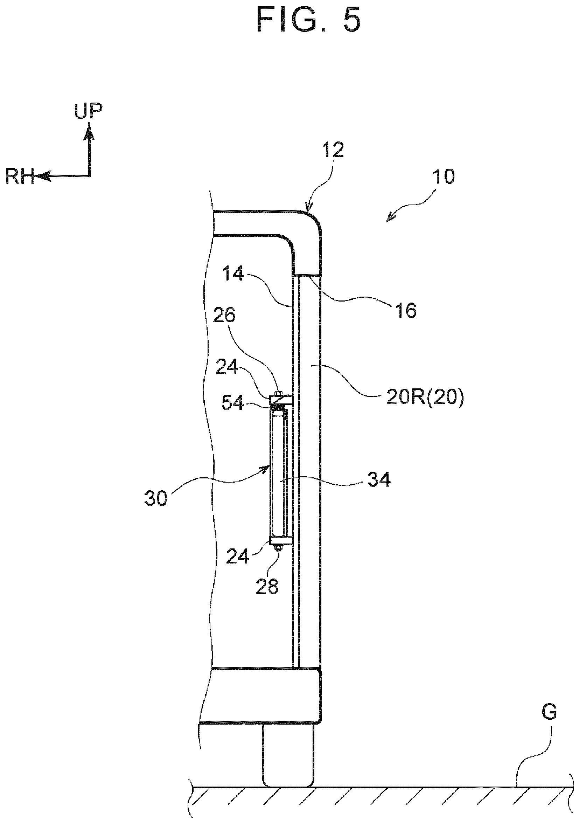

A circular through hole (not illustrated) is provided at each of the second end portions of the support arms 24. The through holes are configured to communicate with a through hole (not illustrated) of the base portion 32. Thus, the base portion 32 is rotatably supported by the support arms 24 with a shaft portion of a bolt 26 inserted through the through holes that communicate with each other from the upper side to be screwed into a nut 28 (see FIGS. 5 and 7) on the lower side.

In one example, the handrail body 34 is formed in the shape of a cylinder (with a circular cross section) that is graspable by a passenger that gets on and off through the entrance opening 16, and provided to extend generally in an inverted "L" shape from the upper part of the base portion 32. That is, the handrail body 34 is shaped so as to form a generally rectangular frame with the base portion 32 and the rail portion 36.

The handrail body 34 may be formed so as to have at least such a length along the horizontal direction that a passenger can grasp the handrail body 34 when the passenger stands on a so-called step near the entrance opening 16 (a length of about 400 mm when the length of the step along the vehicle width direction is about 300 mm, for example). A protective member (not illustrated) made of urethane, vinyl chloride, etc. may be wrapped around the handrail body 34 to allow the passenger to easily grasp the handrail body 34.

As illustrated in FIGS. 3, 4, 6, and 8, the rail portion 36 is provided to extend in the horizontal direction from the lower part of the base portion 32, and integrally couples with the lower part of the base portion 32 and the second end portion of the handrail body 34 (distal end portion in the extending direction). The rail portion 36 holds a distal end portion (second end portion) 42 of a link arm 40 such that the distal end portion 42 is slidable. A base end portion (first end portion) 46 of the link arm 40 is turnably attached to an end portion of the half door 20F or the half door 20R on the elastic body 22 side (see FIG. 2). It should be noted, however, that the rail portion 36 may be provided to extend in the horizontal direction from the base portion 32 and may be provided on the handrail body 34 as a part of the handrail body 34. For example, the rail portion 36 may be provided at the lower part of the handrail body 34, or may be provided at another part of the handrail body 34.

To be specific, the rail portion 36 is formed in the shape of a rectangular tube (with a rectangular cross section) having a long side corresponding to the up-down direction, and a slit portion 38 is provided generally at the middle portion, in the up-down direction, of one side wall of the rail portion 36 (the outer side wall that faces the rear side in the developed posture and that faces the outer side in the vehicle width direction in the retracted posture) to extend in the extending direction (longitudinal direction) over a predetermined length as illustrated in FIG. 3, the slit portion 38 communicating with the inside of the rail portion 36. The rail portion 36 may not have a circular cross section when the rail portion 36 is not grasped by a passenger.

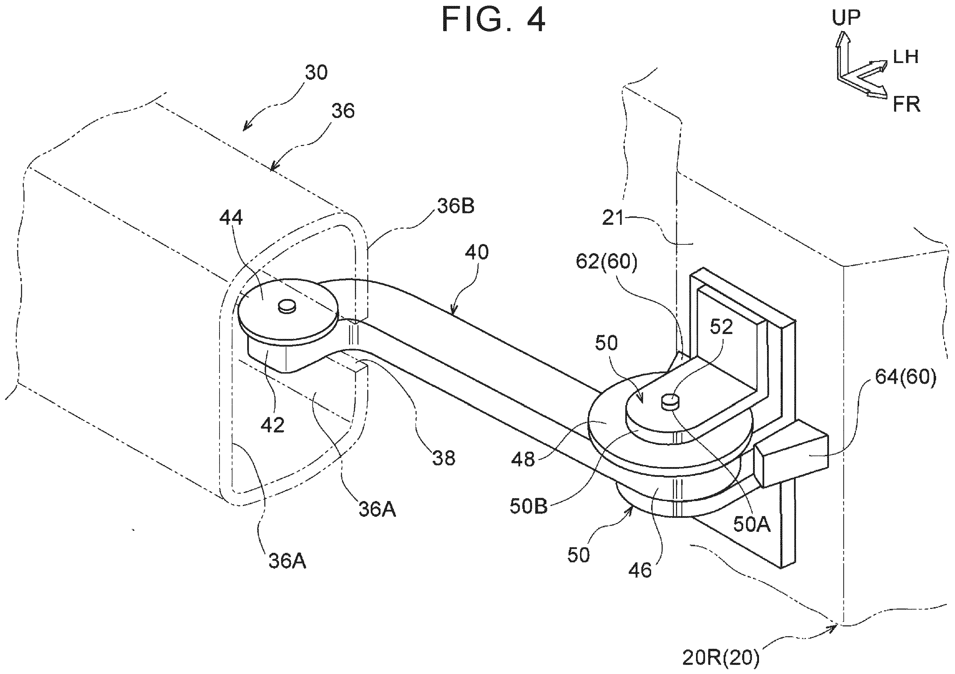

As illustrated in FIG. 4, a slide roller 44 that serves as a rolling element is provided on the upper surface of the distal end portion 42 of the link arm 40 so as to be rotatable in a manner such that the up-down direction corresponds to the axial direction of the slide roller 44. Thus, the distal end portion 42 of the link arm 40 is reciprocally movable along the rail portion 36 with the slide roller 44 rolling in contact with an inner wall surface 36A that faces the slit portion 38 of the rail portion 36 or an inner wall surface 36A on the slit portion 38 side. The slit portion 38 is formed such that the width of the slit portion 38 (gap in the up-down direction) is slightly larger than the thickness of the link arm 40.

The base end portion 46 of the link arm 40 is turnably provided at an end portion of the half door 20R on the elastic body 22 side. To be specific, as illustrated in FIGS. 4, 6, and 8, an end portion of the half door 20R on the elastic body 22 side is formed to be thicker than the other portions. In other words, a projecting portion 21 in a generally trapezoidal shape as viewed in a plan view is provided integrally with an end portion of the half door 20R on the elastic body 22 side and on the inner surface that faces the vehicle cabin when the entrance opening 16 is closed.

A pair of upper and lower brackets 50 are attached to the distal end surface of the projecting portion 21 with a predetermined clearance therebetween. A through hole 50A that penetrates in the up-down direction is provided in each of the brackets 50. A through hole (not illustrated) that penetrates in the up-down direction is also provided in the base end portion 46 of the link arm 40.

Thus, the base end portion 46 of the link arm 40 is supported so as to be turnable (rotatable) in a manner such that the up-down direction corresponds to the axial direction of the base end portion 46 by attaching the link arm 40 with the base end portion 46 of the link arm 40 inserted between the brackets 50 and with a support shaft 52 inserted into the through holes that are communicated with each other. A roller 48 that serves as a rolling member is provided between the brackets 50 and on the upper side of the base end portion 46 of the link arm 40 so as to be rotatable and coaxial with the base end portion 46.

The diameter of the roller 48 is determined such that the roller 48 protrudes from an outer peripheral surface 50B of the brackets 50 to a certain degree as viewed in a plan view, and determined such that the roller 48 can roll in contact with an outer wall surface 36B (also see FIG. 3) of the rail portion 36 at least when the slide doors 20 (the half door 20F and the half door 20R) close the entrance opening 16.

A stopper 60 is provided on the projecting portion 21 to serve as a restriction member that restricts the turning range of the base end portion 46 of the link arm 40. The stopper 60 is provided to project from the distal end surface of the projecting portion 21 on both sides of the base end portion 46, and composed of an inner stopper 62 to be brought into abutment with the link arm 40 when the entrance handrail 30 takes the retracted posture and an outer stopper 64 to be brought into abutment with the link arm 40 when the entrance handrail 30 takes the developed posture.

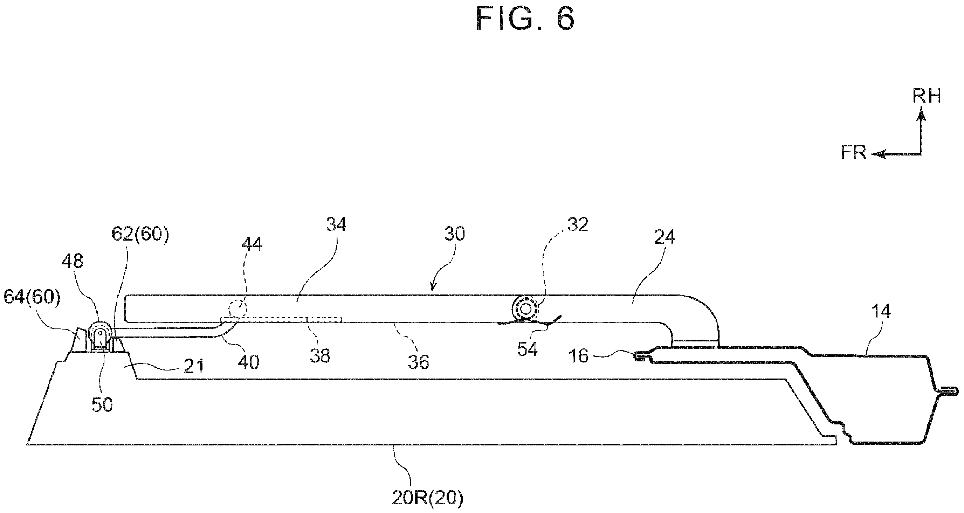

That is, when the entrance handrail 30 takes the retracted posture as illustrated in FIG. 6, the link arm 40 abuts against the distal end surface of the inner stopper 62 to regulate further turning. Thus, movement of the entrance handrail 30 (rail portion 36) in the direction toward the slide door 20 (half door 20R) is hindered by the inner stopper 62 that abuts against the link arm 40.

At this time, the distal end portion 42 (slide roller 44) of the link arm 40 is positioned at the distal end of the rail portion 36, and therefore the entrance handrail 30 cannot turn counterclockwise from the position in FIG. 6. Thus, even if the entrance handrail 30 which is in the retracted posture attempts to move in the direction away from the slide door 20 (half door 20R), such movement is hindered by the link arm 40. In this manner, backlash (rattling) when the entrance handrail 30 takes the retracted posture can be suppressed.

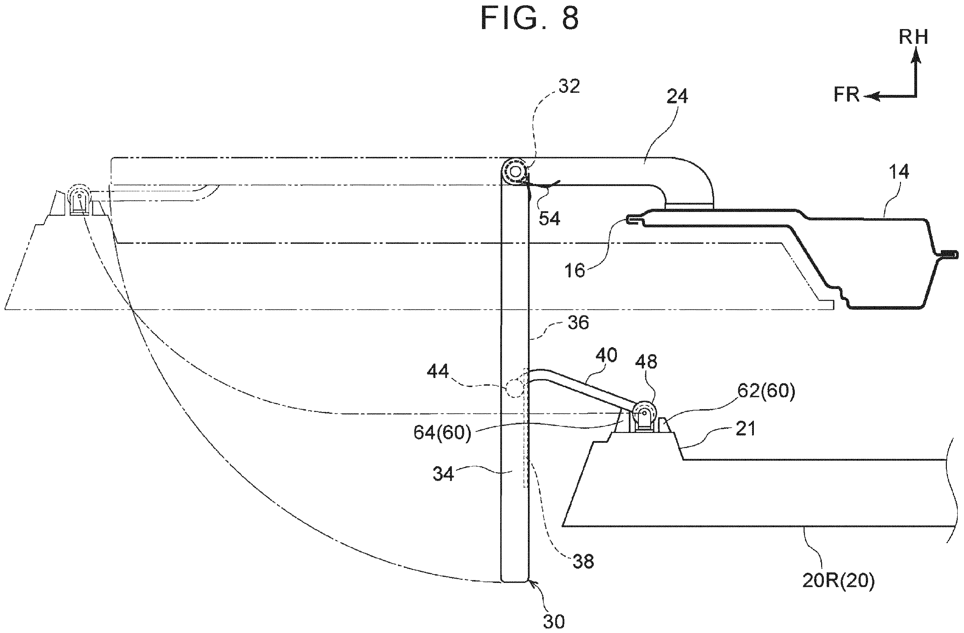

Similarly, when the entrance handrail 30 takes the developed posture as illustrated in FIG. 8, the link arm 40 abuts against the distal end surface (inclined surface) of the outer stopper 64 to regulate further turning. Thus, movement of the entrance handrail 30 (rail portion 36) toward the middle portion of the entrance opening 16 in the front-rear direction is hindered by the link arm 40.

At this time, the distal end portion 42 (slide roller 44) of the link arm 40 is positioned at the base end of the rail portion 36, and therefore the entrance handrail 30 cannot be turned counterclockwise from the position in FIG. 8. Thus, even when the entrance handrail 30 that is in the developed posture attempts to move toward an end portion of the entrance opening 16 in the front-rear direction, such movement is hindered by the outer stopper 64 that abuts against the link arm 40. In this manner, backlash (rattling) when the entrance handrail 30 takes the developed posture can be suppressed also.

As illustrated in FIGS. 3, 6, and 8, the base portion 32 is provided with a torsion spring 54 that serves as an example of a biasing member that biases the entrance handrail 30 in a direction opposite to the direction of projecting outward of the vehicle when the slide door 20 opens and closes the entrance opening 16. Specifically, a coil portion 54C of the torsion spring 54 is fitted with a shaft portion of the bolt 26 between the second end portion of the support arm 24 on the upper side and the upper end portion of the base portion 32. A first end portion 54A of the torsion spring 54 is retained by a wall portion of the support arm 24 that faces the outer side in the vehicle width direction. A second end portion 54B of the torsion spring 54 is retained by a wall portion of the handrail body 34 that faces the outer side in the vehicle width direction in the retracted posture.

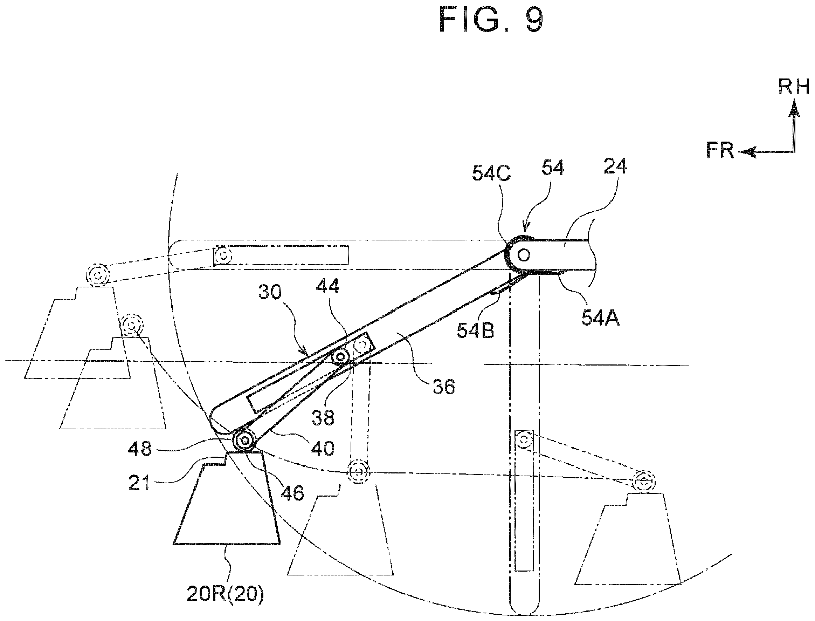

With the torsion spring 54, as illustrated in FIG. 9, the entrance handrail 30 is configured to move following movement of the slide door 20 (not to move ahead of movement of the slide door 20) when the slide door 20 opens the entrance opening 16. The entrance handrail 30 is configured to be moved ahead of movement of the slide door 20 (not to move following movement of the slide door 20) when the slide door 20 closes the entrance opening 16.

Next, the functions of the entrance handrail 30 according to the present embodiment configured as described above will be described in detail.

When the entrance opening 16 is closed by the slide doors 20 (the half door 20F and the half door 20R), as illustrated in FIGS. 5 and 6, the entrance handrail 30 is disposed substantially along the slide doors 20 as viewed from the front view and in a plan view. Specifically, when the entrance opening 16 is closed by the slide doors 20, the distal end portion 42 of the link arm 40 is slid toward the opposite side (the second end portion side) from the base portion 32 along the rail portion 36 (with the slide roller 44 rolling on the inner wall surface 36A), to take the retracted posture in which the handrail body 34 and the rail portion 36 are disposed to extend along the slide doors 20.

That is, when the entrance handrail 30 takes the retracted posture, the handrail body 34 and the rail portion 36 do not project toward the inside of the vehicle (toward the vehicle cabin). Thus, it is possible to suppress limitation on the passenger space (secure as large a passenger space as possible) even when the bus 10 specifically of a small type is provided with the entrance handrail 30.

At this time, the link arm 40 abuts against the distal end surface of the inner stopper 62 that constitutes the stopper 60. That is, the inner stopper 62 that is provided on the projecting portion 21 of the slide door 20 regulates turning of the link arm 40. Thus, backlash (rattling) of the entrance handrail 30 (handrail body 34 (and rail portion 36)) can be suppressed. That is, the entrance handrail 30 in the retracted posture can be fixedly held appropriately.

On the other hand, when the entrance opening 16 is opened by the slide doors 20 (the half door 20F and the half door 20R), as illustrated in FIGS. 7 and 8, the entrance handrail 30 projects outward of the vehicle as viewed from the front view and in the plan view. Specifically, when the entrance opening 16 is opened by the slide doors 20, the distal end portion 42 of the link arm 40 is slid toward the base portion 32 along the rail portion 36 (with the slide roller 44 rolling on the inner wall surface 36A), to take the developed posture in which the handrail body 34 (and the rail portion 36) projects outward of the vehicle (toward the outer side in the vehicle width direction).

Thus, a passenger can grasp the handrail body 34 when the passenger gets on and off the bus 10, which allows the passenger to get on and off the bus 10 easily (get on and off in a stable posture). In particular, the passenger momentarily stands on a single leg when the passenger lands the leg on the ground to get off. Therefore, the presence of the handrail body 34 ahead in the advancing direction allows the passenger to stand firmly to be in a more stable posture.

At this time, moreover, the link arm 40 abuts against the distal end surface of the outer stopper 64 that constitutes the stopper 60. That is, the outer stopper 64 that is provided on the projecting portion 21 of the slide door 20 regulates turning of the link arm 40. Thus, backlash of the entrance handrail 30 (handrail body 34 (and rail portion 36)) can be suppressed.

That is, the entrance handrail 30 in the developed posture can be fixedly held appropriately. Therefore, a passenger can grasp the handrail body 34 with security. Since the handrail body 34 is formed to have a circular cross section, the passenger can grasp the handrail body 34 easily compared to when the handrail body 34 is formed to have a rectangular cross section, for example.

In the entrance handrail 30 according to the present embodiment, the link arm 40, the base end portion 46 of which is turnably attached to each of the slide doors 20 (the half door 20F and the half door 20R), has the distal end portion 42 (slide roller 44) which is slidably held by the rail portion 36. Therefore, the length of the handrail body 34 (and the rail portion 36) can be adjusted to a desired length.

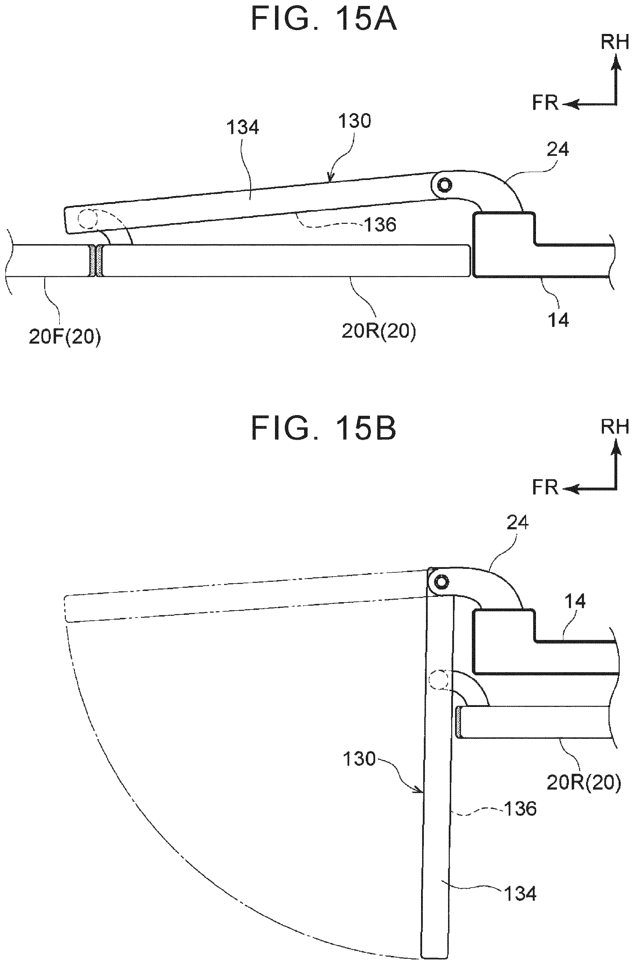

That is, if the base end portion 46 of the link arm 40 is not turnably supported, as illustrated in FIGS. 15A and 15B, for example, the length of a rail portion 136 must be set in accordance with the stroke of the half door 20R, and the length of a handrail body 134 (entrance handrail 130) is also accordingly increased. Specifically, the handrail body 134 on the side of the half door 20R is formed to be long enough to project toward the half door 20F when the entrance opening 16 is closed.

In the present embodiment, however, the base end portion 46 of the link arm 40 is turnably supported. Therefore, the length of the rail portion 36 can be reduced as illustrated in FIGS. 6 and 8, and the length of the handrail body 34 can be accordingly reduced. Hence, when the entrance opening 16 is closed, the handrail body 34 on the half door 20R side does not project toward the half door 20F, and the handrail body 34 on the half door 20F side does not project toward the half door 20R (see FIG. 2).

From the above, the upper limit of the length of the handrail body 34 may be such a length that the handrail body 34 does not project toward the half door 20F or the half door 20R when the entrance opening 16 is closed. Meanwhile, the lower limit of the length of the handrail body 34 may be such a length (e.g. about 400 mm) that a passenger can get on and off easily (get on and off in a stable posture) while grasping the handrail body 34 when the passenger stands on a so-called step near the entrance opening 16.

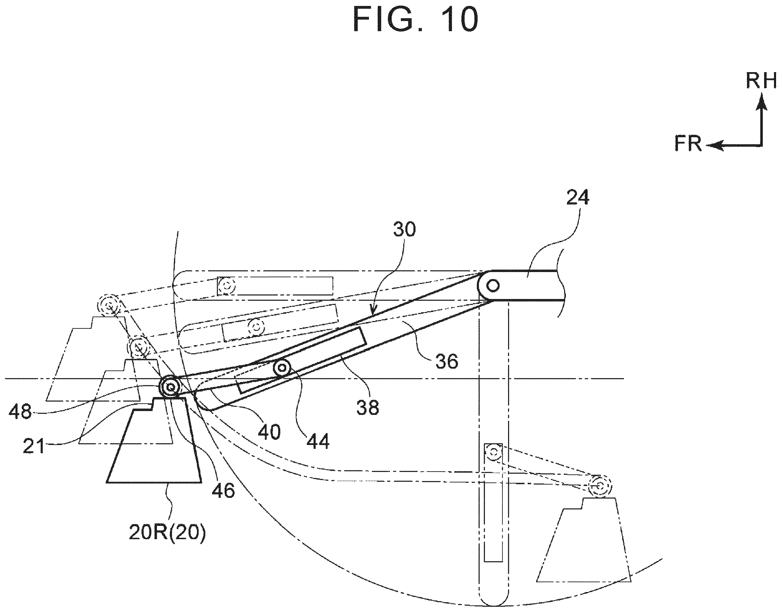

If the base portion 32 is not provided with the torsion spring 54 as illustrated in FIG. 10, the entrance handrail 30 (in particular, the rail portion 36) is occasionally moved downstream in the moving direction (direction of opening the entrance opening 16) ahead of the half door 20R, for example, during operation to open the slide doors 20. If the rail portion 36 moves downstream in the moving direction (direction of opening the entrance opening 16) ahead of the half door 20R, there may occur a failure that the half door 20R does not move smoothly with the half door 20R and the rail portion 36 interfering with each other and getting stuck.

In the present embodiment, however, the base portion 32 is provided with the torsion spring 54 as illustrated in FIG. 9, and therefore the entrance handrail 30 (in particular, the rail portion 36) does not move downstream in the moving direction (direction of opening the entrance opening 16) ahead of the half door 20R, for example, during operation to open the slide doors 20.

In other words, the rail portion 36 always moves with a delay from the half door 20R. Thus, it is possible to suppress or restrain the occurrence of a failure that the half door 20R is not moved smoothly with the half door 20R and the rail portion 36 interfering with each other and getting stuck. That is, the entrance handrail 30 can be turned smoothly.

The same also applies to operation to close the slide doors 20. That is, if the base portion 32 is provided with the torsion spring 54, the entrance handrail 30 (in particular, the rail portion 36) moves downstream in the moving direction (direction of closing the entrance opening 16) ahead of the half door 20R. Therefore, it is possible to suppress or restrain the occurrence of a failure that the half door 20R is not moved smoothly with the half door 20R and the rail portion 36 interfering with each other and getting stuck. That is, the entrance handrail 30 can be turned smoothly.

Even if there occurs a situation in which the biasing force of the torsion spring 54 is insufficient because of temporal degradation etc., for example, at least during operation to close the slide doors 20 (when the entrance handrail 30 is brought from the developed posture into the retracted posture), the roller 48 contacts the outer wall surface 36B of the rail portion 36, and rolls toward the distal end portion (second end portion) in the extending direction along the outer wall surface 36B in conjunction with operation to close the half door 20R. Therefore, the rail portion 36 can be moved (diverted) in the closing direction ahead of the half door 20R.

Thus, it is possible to suppress or restrain the occurrence of a failure that the half door 20R is not moved smoothly with the half door 20R and the rail portion 36 interfering with each other, and to allow the entrance handrail 30 to turn smoothly. The roller 48 may be omitted when there is no possibility of the occurrence of a situation in which the biasing force of the torsion spring 54 is insufficient.

When the entrance handrail 30 takes the developed posture, a clearance enough to allow insertion of a finger is secured between: the elastic body 22 that is attached to an end surface of the half door 20F and the half door 20R on the inner side in the front-rear direction; and the handrail body 34. Therefore, there is no fear that a finger gets injured even if the finger is inserted into the clearance between the elastic body 22 and the handrail body 34 (even if the finger contacts the elastic body 22) when a passenger gets on and off while grasping the handrail body 34. That is, the safety of the passenger is secured.

The distal end portion 42 of the link arm 40 is provided with the slide roller 44 that rolls in contact with the inner wall surface 36A of the rail portion 36. Thus, the distal end portion 42 of the link arm 40 can move along the rail portion 36 smoothly compared to when the distal end portion 42 of the link arm 40 is not provided with the slide roller 44 that rolls in contact with the inner wall surface 36A of the rail portion 36.

In the entrance handrail 30, the distal end portion (second end portion) of the handrail body 34 in the extending direction and the distal end portion (second end portion) of the rail portion 36 in the extending direction are integrally coupled to each other. Thus, the rigidity and the strength of the handrail body 34 can be improved compared to when the distal end portion of the handrail body 34 in the extending direction and the distal end portion of the rail portion 36 in the extending direction are not integrally coupled to each other.

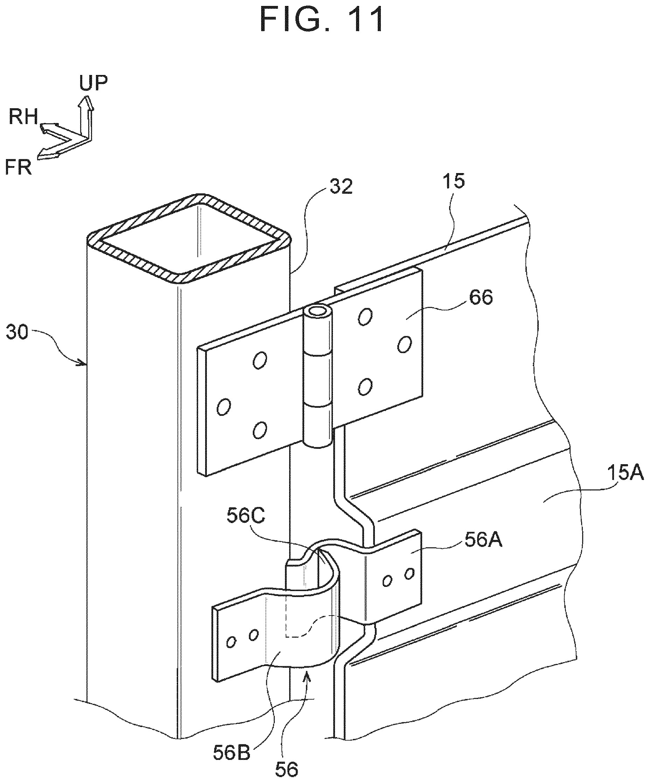

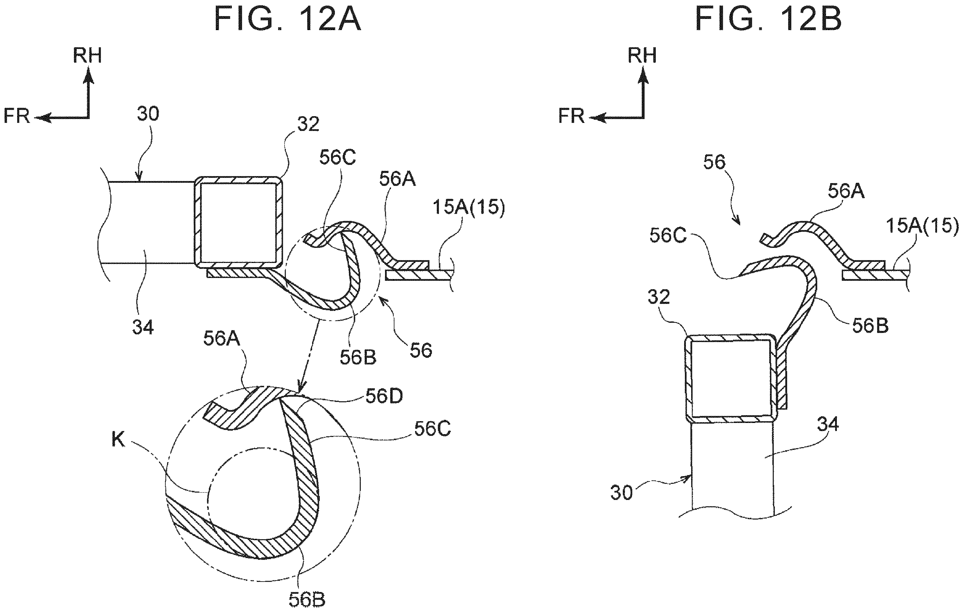

As illustrated in FIGS. 11, 12A, and 12B, the base portion 32 may be provided with a resistance mechanism 56 in place of the torsion spring 54, the resistance mechanism 56 providing resistance against turning of the entrance handrail 30 (the handrail body 34 and the rail portion 36) in the direction of projecting outward of the vehicle when the entrance opening 16 is opened by the slide doors 20. In this case, the base portion 32 of the entrance handrail 30 is turnably attached to a bracket 15 that is provided on the pillar 14, via a pair of upper and lower hinges 66 (the lower hinge 66 is not illustrated).

The resistance mechanism 56 is provided between the bracket 15 and the base portion 32. To be specific, the resistance mechanism 56 is composed of a plate spring 56A attached to the bracket 15 and a projecting member 56B attached to the base portion 32. The bracket 15 is formed to have a generally hat-shaped cross section so as to project toward the outer side in the vehicle width direction as viewed from the front. The plate spring 56A is attached to a projecting wall portion 15A that projects toward the outer side in the vehicle width direction.

The plate spring 56A is formed in a generally arc shape that projects inward (toward the inner side in the vehicle width direction) as viewed in the plan view. The distal end portion of the plate spring 56A is slightly bent inward. The projecting member 56B is formed in a generally arc shape that projects outward (toward the outer side in the vehicle width direction) as viewed in the plan view when the entrance handrail 30 takes the retracted posture. A distal end portion 56C of the projecting member 56B is configured to abut against (contact with a predetermined pressure) the generally arc-shaped inner peripheral surface of the plate spring 56A. The distal end portion 56C of the projecting member 56B is shaped to project linearly from a point on a virtual circumference K that is obtained along the generally arc shape of the projecting member 56B as viewed in the plan view. The distal end surface of the distal end portion 56C defines an inclined surface 56D such that the distal end portion 56C is pointed with an acute angle (see FIG. 12A).

With the thus configured resistance mechanism 56, the projecting member 56B causes a turning resistance that impedes turning of the base portion 32 in the opening direction using the biasing force of the plate spring 56A while the distal end portion 56C of the projecting member 56B is in abutment with the inner peripheral surface of the plate spring 56A during operation to open the slide door 20. Consequently, the rail portion 36 can move more slowly than the half door 20R. That is, it is possible to suppress or restrain the link arm 40 from interfering and getting stuck with the rail portion 36, and to allow the entrance handrail 30 to turn smoothly.

When the entrance handrail 30 takes the developed posture, the distal end portion 56C of the projecting member 56B is disengaged from the plate spring 56A. Consequently, it is possible to suppress application of a load due to the plate spring 56A (a biasing force that acts in the direction of closing the slide door 20 via the entrance handrail 30 and the link arm 40) to the half door 20R that has opened the entrance opening 16.

During operation to close the slide door 20 (when the entrance handrail 30 is brought from the developed posture into the retracted posture), the entrance handrail 30 is not biased in the direction of closing the slide door 20 by the plate spring 56A until the distal end portion 56C of the projecting member 56B comes into contact with the inner peripheral surface of the plate spring 56A. Therefore, it is necessary to provide the roller 48 that moves (diverts) the rail portion 36 in the closing direction ahead of the half door 20R when such a resistance mechanism 56 is used.

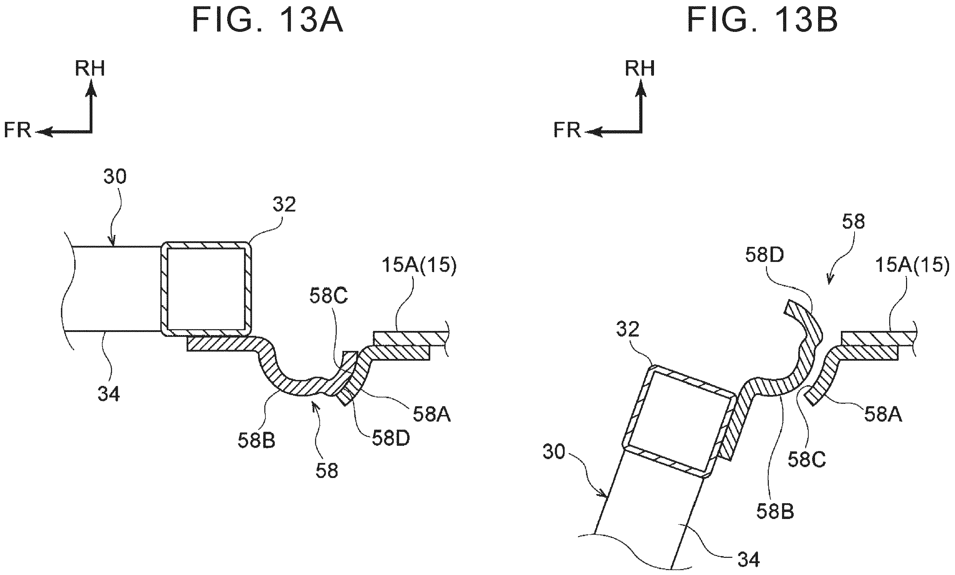

As illustrated in FIGS. 13A and 13B, a resistance mechanism 58 that is different from the resistance mechanism 56 may be provided. That is, the resistance mechanism 58 is also provided between the bracket 15 and the base portion 32. To be specific, the resistance mechanism 58 is composed of a plate spring 58A attached to the bracket 15 and a projecting member 58B attached to the base portion 32. The plate spring 58A is also attached to the projecting wall portion 15A of the bracket 15.

The plate spring 58A is formed generally in an "L" shape that projects outward (toward the outer side in the vehicle width direction) as viewed in the plan view. A surface of the plate spring 58A that faces the base portion 32 side defines a sliding contact surface 58C in a generally arc shape. The projecting member 58B is formed in a generally arc shape that projects outward (toward the outer side in the vehicle width direction) as viewed in the plan view when the entrance handrail 30 takes the retracted posture. An outer peripheral surface 58D of the distal end side of the projecting member 58B is configured to contact the sliding contact surface 58C of the plate spring 58A with predetermined friction.

More specifically, the projecting member 58B is formed in a generally wavy shape as viewed in the plan view, in which the distal end side with a large radius of curvature and the base end side with a small radius of curvature are integrally formed to be continuously curved, and configured such that the sliding resistance (friction) between the outer peripheral surface 58D on the distal end side, the radius of curvature of which is larger than that of the base end side, and the sliding contact surface 58C of the plate spring 58A has a predetermined magnitude.

When the projecting member 58B is turned in the direction of opening the slide door 20 by a predetermined angle or more along with turning of the base portion 32, the outer peripheral surface 58D is disengaged from the sliding contact surface 58C (see FIG. 13B), since the radius of curvature on the base end side is smaller than the radius of curvature on the distal end side. The entrance handrail 30 is configured to be biased in the direction of closing the slide door 20 by the biasing force (pressing force) of the plate spring 58A when the outer peripheral surface 58D of the projecting member 58B is in contact with the sliding contact surface 58C of the plate spring 58A.

With the thus configured resistance mechanism 58, the projecting member 58B causes a turning resistance that impedes turning of the base portion 32 in the opening direction using the friction force and the biasing force of the sliding contact surface 58C of the plate spring 58A while the outer peripheral surface 58D of the projecting member 58B is in contact with the sliding contact surface 58C of the plate spring 58A during operation to open the slide door 20. Consequently, the rail portion 36 can move more slowly than the half door 20R. That is, it is possible to suppress or restrain the link arm 40 from interfering and getting stuck with the rail portion 36, and to allow the entrance handrail 30 to turn smoothly.

When the entrance handrail 30 takes the developed posture, the outer peripheral surface 58D of the projecting member 58B is disengaged from the sliding contact surface 58C of the plate spring 58A. Consequently, it is possible to suppress application of a load due to the plate spring 58A (a biasing force that acts in the direction of closing the slide door 20 via the entrance handrail 30 and the link arm 40) to the half door 20R that has opened the entrance opening 16.

During operation to close the slide door 20 (when the entrance handrail 30 is brought from the developed posture into the retracted posture), the entrance handrail 30 is not biased in the closing direction by the plate spring 58A until the outer peripheral surface 58D of the projecting member 58B comes into contact with the sliding contact surface 58C of the plate spring 58A. Therefore, it is necessary to provide the roller 48 that moves (diverts) the rail portion 36 in the closing direction ahead of the half door 20R also when such a resistance mechanism 58 is used.

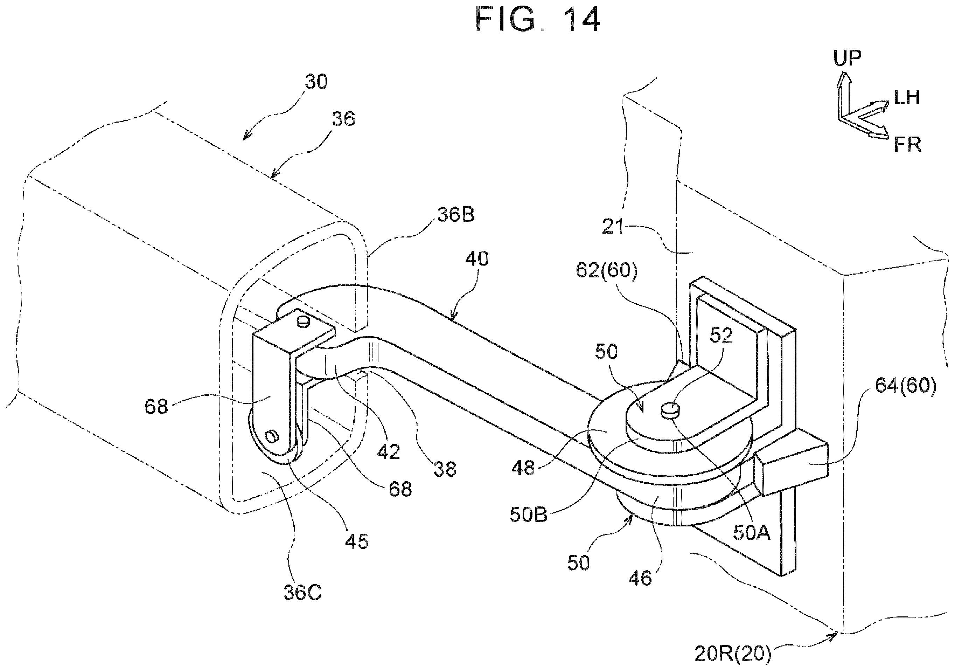

The distal end portion 42 of the link arm 40 is not limited to being provided with the slide roller 44 that rolls in contact with the inner wall surface 36A that faces the slit portion 38 of the rail portion 36 or the inner wall surface 36A on the slit portion 38 side. As illustrated in FIG. 14, for example, the distal end portion 42 of the link arm 40 may be provided with a slide roller 45 that rolls in contact with an inner wall surface 36C of the rail portion 36 on the lower side. In this case, the slide roller 45 may be provided at the distal end portion 42 of the link arm 40 so as to be rotatable via a pair of brackets 68.

While the entrance handrail 30 according to the present embodiment has been described above with reference to the drawings, the entrance handrail 30 according to the present embodiment is not limited to that illustrated in the drawings, and may be subjected to design changes, as appropriate, within the scope of the present disclosure. For example, the stopper 60 may be provided on the slide door 20 so as to be contacted by the link arm 40 when the entrance handrail 30 takes at least one of the developed posture and the retracted posture.

The roller 48 is not limited to being held coaxially with the base end portion 46 of the link arm 40 by the pair of brackets 50, and may be rotatably provided on the projecting portion 21 of the slide door 20 separately from the base end portion 46 of the link arm 40. The entrance handrail 30 is not limited to being provided on both the half door 20F and the half door 20R that constitute the slide doors 20, and may be provided on only one half door (e.g. the half door 20R) of the slide doors 20.

## Claims

1. An entrance handrail (30) comprising:
abase portion (32) provided proximal to an entrance opening (16) of a vehicle so as to be turnable in a manner such that a vehicle body up-down direction corresponds to an axial direction of the base portion (32);
a handrail body (34) that extends from an upper part of the base portion (32) and that is graspable by a passenger that gets on and off through the entrance opening (16); and
a rail portion (36) that extends from a lower part of the base portion (32), the rail portion (36) configured to hold a second end portion (42) of a link arm (40) such that the second end portion (42) is slidable, the link arm (40) including a first end portion turnably attached to a slide door (20) that is movable along an outer wall surface of the vehicle to open and close the entrance opening (16),
wherein as viewed in a plan view, the handrail body (34) and the rail portion (36) take a developed posture in which the handrail body (34) and the rail portion (36) project outward of the vehicle with the second end portion (42) of the link arm (40) slid toward the base portion (32) along the rail portion (36) when the slide door (20) opens the entrance opening (16), and
the handrail body (34) and the rail portion (36) take a retracted posture in which the handrail body (34) and the rail portion (36) are disposed to extend along the slide door (20) with the second end portion (42) of the link arm (40) slid toward an opposite side from the base portion (32) along the rail portion (36) when the slide door (20) closes the entrance opening (16).

2. The entrance handrail (30) according to claim 1, wherein the slide door (20) is provided with a restriction member configured to restrict turning of the link arm (40) when the handrail body (34) and the rail portion (36) take at least one of the developed posture and the retracted posture.

3. The entrance handrail (30) according to claim 1 or 2, wherein the base portion (32) is provided with a biasing member configured to bias the handrail body (34) and the rail portion (36) in an opposite direction to a direction in which the handrail body (34) and the rail portion (36) project outward of the vehicle when the slide door (20) opens the entrance opening (16).

4. The entrance handrail (30) according to claim 1 or 2, wherein the base portion (32) is provided with a resistance mechanism (56, 58) configured to provide resistance against turning of the handrail body (34) and the rail portion (36) in a direction in which the handrail body (34) and the rail portion (36) project outward of the vehicle when the slide door (20) opens the entrance opening (16).

5. The entrance handrail (30) according to any of claims 1 to 4, wherein the slide door (20) is provided with a rolling member that is rollable in contact with an outer wall surface (36B) of the rail portion (36) at least when the slide door (20) closes the entrance opening (16).

6. The entrance handrail (30) according to any of claims 1 to 5, wherein the second end portion (42) of the link arm (40) is provided with a rolling element that is configured to roll in contact with an inner wall surface (36A, 36C) of the rail portion (36).

7. The entrance handrail (30) according to any of claims 1 to 6, wherein a distal end portion of the handrail body (34) in an extending direction and a distal end portion of the rail portion (36) in an extending direction are integrally coupled to each other.

8. A slide door mechanism comprising:
an entrance handrail (30);
a slide door (20) that is movable along an outer wall surface of a vehicle to open and close an entrance opening (16); and
a link arm (40), wherein
the entrance handrail includes:
a base portion (32) provided proximal to the entrance opening (16) of the vehicle so as to be turnable in a manner such that a vehicle body up-down direction corresponds to an axial direction of the base portion (32);
a handrail body (34) that extends from an upper part of the base portion (32) and that is graspable by a passenger that gets on and off through the entrance opening (16); and
a rail portion (36) that extends from a lower part of the base portion (32), wherein:
a first end portion of the link arm (40) is turnably attached to the slide door (20), and a second end portion (42) of the link arm (40) is slidably held by the rail portion (36); and
as viewed in a plan view, the handrail body (34) and the rail portion (36) take a developed posture in which the handrail body (34) and the rail portion (36) project outward of the vehicle with the second end portion (42) of the link arm (40) slid toward the base portion (32) along the rail portion (36) when the slide door (20) opens the entrance opening (16); and
the handrail body (34) and the rail portion (36) take a retracted posture in which the handrail body (34) and the rail portion (36) are disposed to extend along the slide door (20) with the second end portion (42) of the link arm (40) slid toward an opposite side from the base portion (32) along the rail portion (36) when the slide door (20) closes the entrance opening (16).

9. The slide door mechanism according to claim 8, wherein the slide door (20) is provided with a restriction member configured to restrict turning of the link arm (40) when the handrail body (34) and the rail portion (36) take at least one of the developed posture and the retracted posture.

10. The slide door mechanism according to claim 8 or 9, wherein the base portion (32) is provided with a biasing member configured to bias the handrail body (34) and the rail portion (36) in an opposite direction to a direction in which the handrail body (34) and the rail portion (36) project outward of the vehicle when the slide door (20) opens the entrance opening (16).

11. The slide door mechanism according to claim 8 or 9, wherein the base portion (32) is provided with a resistance mechanism (56, 58) configured to provide resistance against turning of the handrail body (34) and the rail portion (36) in a direction in which the handrail body (34) and the rail portion (36) project outward of the vehicle when the slide door (20) opens the entrance opening (16).

12. The slide door mechanism according to any of claims 8 to 11, wherein the slide door (20) is provided with a rolling member that is rollable in contact with an outer wall surface (36B) of the rail portion (36) at least when the slide door (20) closes the entrance opening (16).

13. The slide door mechanism according to any of claims 8 to 12, wherein the second end portion (42) of the link arm (40) is provided with a rolling element configured to roll in contact with an inner wall surface (36A, 36C) of the rail portion (36).

14. The slide door mechanism according to any of claims 8 to 13, wherein a distal end portion of the handrail body (34) in an extending direction and a distal end portion of the rail portion (36) in an extending direction are integrally coupled to each other.

15. An entrance handrail (30) comprising:
abase portion (32) provided proximal to an entrance opening (16) of a vehicle so as to be turnable in a manner such that a vehicle body up-down direction corresponds to an axial direction of the base portion (32); and
a handrail body (34) that extends from the base portion (32) and that is graspable by a passenger that gets on and off through the entrance opening (16), wherein:
the handrail body (34) includes a rail portion (36), the rail portion (36) configured to hold a second end portion (42) of a link arm (40) such that the second end portion (42) is slidable, the link arm (40) including a first end portion turnably attached to a slide door (20) that is movable along an outer wall surface of the vehicle to open and close the entrance opening (16); and
as viewed in a plan view, the handrail body (34) takes a developed posture in which the handrail body (34) projects outward of the vehicle with the second end portion (42) of the link arm (40) slid toward the base portion (32) along the rail portion (36) when the slide door (20) opens the entrance opening (16), and
the handrail body (34) takes a retracted posture in which the handrail body (34) is disposed to extend along the slide door (20) with the second end portion (42) of the link arm (40) slid toward an opposite side from the base portion (32) along the rail portion (36) when the slide door (20) closes the entrance opening (16).
